# EUROPEAN PATENT SPECIFICATION

(11) **EP 4 364 972 B1**
(45) Date of publication and mention of the grant of the patent: **25.06.2025**
(21) Application number: 23206183.8
(22) Date of filing: 26.10.2023
(51) Int. Cl.: B60C 11/03, B60C 11/13

(54) **HEAVY DUTY TIRE**
SCHWERLASTREIFEN
PNEU POUR POIDS LOURDS

(30) Priority: 02.11.2022 JP 2022175927
(43) Date of publication of application: 08.05.2024
(73) Proprietor: Sumitomo Rubber Industries, Ltd., Kobe-shi, Hyogo 651-0072 (JP)
(72) Inventor: ITO, Shuhei, Kobe-shi, 651-0072 (JP)
(74) Representative: Manitz Finsterwald Patent- und Rechtsanwaltspartnerschaft mbB

(56) References cited:
- EP-A1- 4 183 598
- DE-A1- 102020 214 281
- US-A1- 2016 082 779
- US-A1- 2022 324 264

## Description

### BACKGROUND OF THE INVENTION

### Field of the Invention

The present invention relates to a heavy duty tire.

### Background Art

The tread of a tire has circumferential grooves continuously extending in the circumferential direction thereof. The circumferential grooves divide the tread into a plurality of land portions. Among the plurality of land portions, a land portion including an equator or a land portion close to the equator is also referred to as crown land portion, and a land portion close to the crown land portion is also referred to as middle land portion.

If the groove width of each circumferential groove is made narrower and the adjacent land portions are made closer to each other, a state where the land portions support each other is obtained during contact with the ground. The deformation of the land portions is suppressed, and the apparent stiffness of the land portions is increased. The tire can have reduced rolling resistance and can have improved wear resistance.

A heavy duty pneumatic tire in which, in order to reduce rolling resistance, a tread is formed such that the groove width of each circumferential groove is made narrower to allow land portions to support each other, is known (e.g., Japanese Laid-Open Patent Publication No. 2012-020714).

Tires mounted on the trailer axle of a vehicle such as a truck are swung sideways during lane change or are dragged sideways during cornering. At this time, a lateral force (force directed in the axial direction of the tire) acts on each tire.

In a tread in which land portions are made closer to each other in a center portion, the ground-contact pressure of the center portion is increased. In particular, the ground-contact pressure at the edge of each land portion tends to increase. When a tire having such a tread is mounted on a trailer axle, there is a concern that damage such as chipping may occur at the edge of the land portion. In this tread, the groove volume of each circumferential groove is decreased, so that there is also a concern that braking performance on a wet road surface (hereinafter, also referred to as wet performance) may decrease.
DE 10 2020 214 281 Al discloses a heavy duty tire comprising the features according to the preamble of claim 1.
US 2016/0082779 Al discloses a heavy duty tire comprising features according to related technology.

The present invention has been made in view of such circumstances. An object of the present invention is to provide a heavy duty tire that can achieve reduction of the risk of damage to each land portion edge and improvement of wet performance while suppressing an increase in rolling resistance and a decrease in wear resistance.

### SUMMARY OF THE INVENTION

This object is satisfied by a heavy duty tire comprising the features of claim 1. The tire includes a tread having a tread surface configured to come into contact with a road surface. The tread has a plurality of circumferential grooves continuously extending in a circumferential direction. The plurality of circumferential grooves divide the tread into a plurality of land portions aligned in an axial direction. Among the plurality of land portions, a land portion including an equator or a land portion closest to the equator is a crown land portion, and a land portion closest to the crown land portion is a middle land portion. The plurality of circumferential grooves each have a pair of groove walls including a groove opening, and a groove bottom portion including a groove bottom. Among the plurality of circumferential grooves, a circumferential groove located between a middle land portion on a first end side of the tread surface and a middle land portion on a second end side of the tread surface is a circumferential narrow groove. The circumferential narrow groove includes a tapered portion including the groove opening, and a body portion including the groove bottom. The tapered portion is tapered inward from the groove opening. The pair of groove walls come into contact with each other at the body portion when the tire comes into contact with a road surface. The tapered portion includes wide portions in which the groove opening is wide, and narrow portions in which the groove opening is narrow. The wide portions and the narrow portions are arranged alternately in the circumferential direction.

According to the present invention, a heavy duty tire that can achieve reduction of the risk of damage to each land portion edge and improvement of wet performance while suppressing an increase in rolling resistance and a decrease in wear resistance, is obtained.

### BRIEF DESCRIPTION OF THE DRAWINGS

FIG. 1 is a development view showing a tread of a heavy duty tire according to one embodiment of the present invention;
FIG. 2 is a cross-sectional view showing a part of a cross-section taken along a line II-II in FIG. 1;
FIG. 3 is a cross-sectional view showing a part of a cross-section taken along a line III-III in FIG. 1;
FIG. 4 is a cross-sectional view showing a part of a cross-section taken along a line IV-IV in FIG. 1;
FIG. 5 is a cross-sectional view showing a modification of a circumferential narrow groove; and
FIG. 6 is a cross-sectional view showing another modification of the circumferential narrow groove.

### DETAILED DESCRIPTION

Hereinafter, the present invention will be described in detail based on preferred embodiments with appropriate reference to the drawings.

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is also referred to as standardized state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between left and right beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

### [Outline of Embodiments of Present Invention]

### [Configuration 1]

A heavy duty tire according to one aspect of the present invention is a tire including a tread having a tread surface configured to come into contact with a road surface wherein: the tread has a plurality of circumferential grooves continuously extending in a circumferential direction; the plurality of circumferential grooves divide the tread into a plurality of land portions aligned in an axial direction; among the plurality of land portions, a land portion including an equator or a land portion closest to the equator is a crown land portion, and a land portion closest to the crown land portion is a middle land portion; the plurality of circumferential grooves each have a pair of groove walls including a groove opening, and a groove bottom portion including a groove bottom; among the plurality of circumferential grooves, a circumferential groove located between a middle land portion on a first end side of the tread surface and a middle land portion on a second end side of the tread surface is a circumferential narrow groove; the circumferential narrow groove includes a tapered portion including the groove opening, and a body portion including the groove bottom; the tapered portion is tapered inward from the groove opening; the pair of groove walls come into contact with each other at the body portion when the tire comes into contact with a road surface; the tapered portion includes wide portions in which the groove opening is wide, and narrow portions in which the groove opening is narrow; and the wide portions and the narrow portions are arranged alternately in the circumferential direction.

By forming the tire as described above, deformation of the land portions is suppressed. This tire can have reduced rolling resistance and can have improved wear resistance. The tapered portion suppresses concentration of stress on the groove opening. Damage such as chipping is less likely to occur at the groove opening of each land portion. The tire can reduce the risk of damage to each land portion edge. The tapered portion increases the groove volume of the circumferential narrow groove. Even though the groove widths of the circumferential grooves between the left and right middle land portions are made narrower and the land portions are arranged closer to each other, the tire can exhibit good wet performance.

The tire can reduce the risk of damage to each land portion edge and can exhibit good wet performance while suppressing an increase in rolling resistance and a decrease in wear resistance.

### [Configuration 2]

Preferably, in the heavy duty tire described in [Configuration 1] above, in two adjacent circumferential narrow grooves, the wide portions of the circumferential narrow groove on the first end side of the tread surface overlap the narrow portions of the circumferential narrow groove on the second end side of the tread surface in the axial direction.

By forming the tire as described above, the tire can effectively suppress stiffness variation of the crown land portion and the middle land portions in the circumferential direction. The tire can effectively reduce the risk of damage to each land portion edge and can effectively exhibit good wet performance while suppressing an increase in rolling resistance and a decrease in wear resistance.

### [Configuration 3]

Preferably, in the heavy duty tire described in [Configuration 1] or [Configuration 2] above, a ratio of a groove width of each of the wide portions to a groove width of each of the narrow portions is not greater than 3.0.

By forming the tire as described above, concentration of stress on the boundary portion between each wide portion and each narrow portion is suppressed. The tire can effectively inhibit uneven wear from locally occurring. The tire can have improved wear resistance.

### [Configuration 4]

In the heavy duty tire described in any one of [Configuration 1] to [Configuration 3] above, the body portion has a width of not less than 0.3 mm and not greater than 3.0 mm.

By forming the tire as described above, the land portions are inhibited from coming into contact with each other when the tire is inflated. Since the tire can be properly inflated, the profile of the tread surface is formed as a proper profile. The tire can suppress occurrence of uneven wear due to profile irregularities. When the tread comes into contact with a road surface, the land portions can come into contact with each other to support each other. Since deformation of the land portions is suppressed, the tire can have reduced rolling resistance and can have improved wear resistance.

### [Configuration 5]

Preferably, in the heavy duty tire described in any one of [Configuration 1] to [Configuration 4] above, a ratio of a depth of the tapered portion to a groove depth of the circumferential narrow groove is not less than 0.05 and not greater than 0.30.

By forming the tire as described above, the tapered portion can contribute to increasing the groove volume of the circumferential narrow groove. Even though the groove widths of the circumferential grooves between the left and right middle land portions are made narrower and the land portions are arranged closer to each other, the tire can exhibit good wet performance. Since the stiffness of the land portions is appropriately maintained, the tire can suppress an increase in rolling resistance and can maintain good wear resistance.

### [Configuration 6]

In the heavy duty tire described in any one of [Configuration 1] to [Configuration 5] above, among the plurality of land portions, a land portion closest to the equator after the middle land portion is a shoulder land portion, among the plurality of circumferential grooves, a circumferential groove located between the middle land portion and the shoulder land portion is a shoulder circumferential groove, a groove wall located on the equator side, out of the pair of groove walls of the shoulder circumferential groove, is inclined with respect to a normal line of the tread surface at the groove opening, and an inclination angle of the groove wall located on the equator side is not less than 10 degrees.

By forming the tire as described above, concentration of stress on the edge of the top surface of the middle land portion is suppressed. The tire can effectively suppress occurrence of damage at the edge of the top surface of the middle land portion.

### [Configuration 7]

Preferably, in the heavy duty tire described in any one of [Configuration 1] to [Configuration 6] above, the body portion has an enlarged-width portion on the groove bottom side, and the body portion has a maximum width at the enlarged-width portion.

By forming the tire as described above, the enlarged-width portion contributes to increasing the groove volume of the circumferential narrow groove. The circumferential narrow groove having the enlarged-width portion allows water existing between a road surface and the tread surface to be effectively drained as compared to a circumferential narrow groove not having the enlarged-width portion. Even though the groove widths of the circumferential grooves between the left and right middle land portions are made narrower and the land portions are arranged closer to each other, the tire can exhibit good wet performance.

### [Configuration 8]

Preferably, in the heavy duty tire described in [Configuration 7] above, the tapered portion side of the enlarged-width portion is curved so as to be recessed inward from an outside of the enlarged-width portion or curved so as to bulge outward from an inside of the enlarged-width portion.

By forming the tire as described above, the tapered portion side of the enlarged-width portion contributes to increasing the groove volume. Water existing between a road surface and the tread surface is effectively drained. Even though the groove widths of the circumferential grooves between the left and right middle land portions are made narrower and the land portions are arranged closer to each other, the tire can exhibit good wet performance. Since the force acting on the tapered portion side is effectively distributed, damage to the circumferential narrow groove at the enlarged-width portion is suppressed. The circumferential narrow groove can stably exhibit its function.

### [Configuration 9]

More preferably, in the heavy duty tire described in [Configuration 8] above, the tapered portion side of the enlarged-width portion is curved so as to be recessed inward from the outside of the enlarged-width portion.

By forming the tire as described above, the tire can effectively exhibit wet performance. The circumferential narrow groove can more stably exhibit its function.

### [Details of Embodiments of Present Invention]

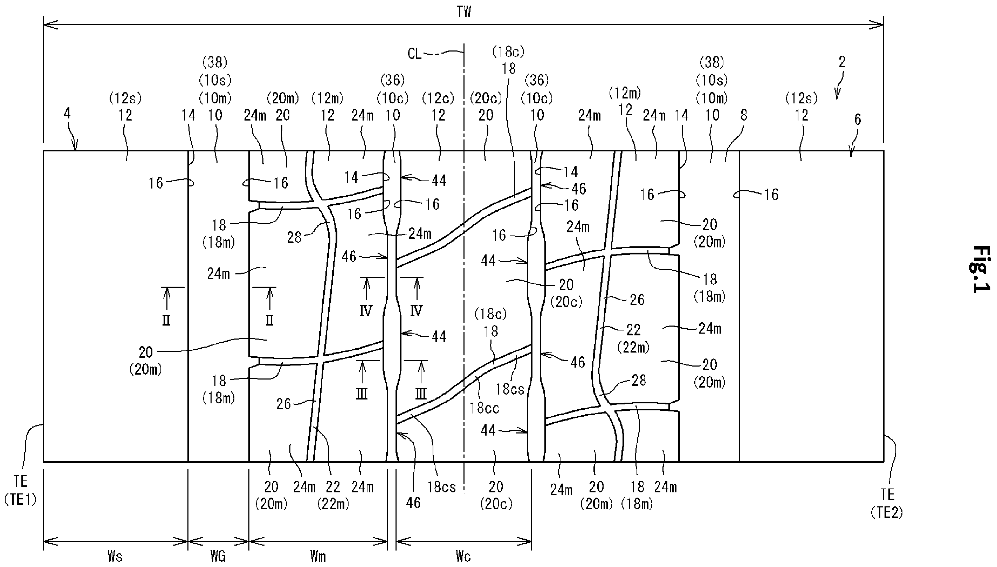

FIG. 1 shows a part of a tire 2 according to one embodiment of the present invention. The tire 2 is mounted to a vehicle such as a truck and a bus. Specifically, the tire 2 is mounted to a trailer axle that is provided to the vehicle so as to be freely rotatable. The tire 2 is a heavy duty tire.

In FIG. 1, the right-left direction is the axial direction of the tire 2, and the up-down direction is the circumferential direction of the tire 2. The direction perpendicular to the surface of the drawing sheet of FIG. 1 is the radial direction of the tire 2. In FIG. 1, an alternate long and short dash line CL extending in the circumferential direction represents the equator plane of the tire 2.

FIG. 1 shows a tread 4. The tire 2 includes the tread 4. The tread 4 is included in a tread portion of the tire 2. The tread 4 is formed from a crosslinked rubber.

The tread 4 comes into contact with a road surface at a tread surface 6 thereof. The tread 4 has the tread surface 6 which comes into contact with a road surface. A line of intersection of the tread surface 6 and the equator plane CL is an equator.

FIG. 1 is a development view of the tread surface 6. In FIG. 1, each position indicated by reference character TE is an end of the tread surface 6. In the tread surface 6 shown in FIG. 1, the end TE of the tread surface 6 located on the left side of the equator plane CL is a first end TE1, and the end TE of the tread surface 6 located on the right side of the equator plane CL is a second end TE2. In FIG. 1, a length indicated by reference character TW is the width of the tread surface 6. The width TW of the tread surface 6 is the distance in the axial direction from the first end TE1 to the second end TE2.

In the present invention, if the ends TE of the tread surface 6 cannot be identified as clear edges in appearance, positions, on the tread surface 6, corresponding to the axially outer ends (also referred to as ground-contact ends) of a ground-contact surface are specified as the ends TE of the tread surface 6. The ground-contact surface is obtained when a load equivalent to a standardized load of the tire 2 is applied to the tire 2 and the tire 2 is brought into contact with a road surface composed of a flat surface in a state where the camber angle of the tire 2 in a standardized state is set to 0°.

Grooves 8 are formed on the tread 4. Accordingly, a tread pattern is formed on the tread 4. FIG. 1 shows the tread pattern of the tire 2. The tread pattern in FIG. 1 is a substantially point-symmetrical tread pattern having a center point on the equator. Although not shown, the tire 2 may have, for example, a line-symmetrical tread pattern centered on the equator, or an asymmetrical tread pattern. The tire 2 may have a tread pattern having directivity in the circumferential direction.

On the tread 4, a plurality of circumferential grooves 10 are formed so as to continuously extend in the circumferential direction. The tread 4 shown in FIG. 1 has four circumferential grooves 10. Accordingly, five land portions 12 are formed in the tread 4 so as to be aligned in the axial direction. The four circumferential grooves 10 divide the tread 4 (specifically, a portion including the tread surface 6 of the tread 4) into the five land portions 12.

Each circumferential groove 10 has a groove opening 14 extending in the circumferential direction. The groove opening 14 includes a pair of edges 16. The groove width of the circumferential groove 10 is represented as the distance in the axial direction between the pair of edges 16. In the case where the groove width of the circumferential groove 10 varies in the circumferential direction, the groove width of the circumferential groove 10 is represented using the minimum width. The groove depth of the circumferential groove 10 is represented as the shortest distance from a line segment connecting the left and right edges 16 to the groove bottom.

Among the four circumferential grooves 10, the circumferential groove 10 closest to the equator is a center circumferential groove 10c. The circumferential groove 10 closest to the center circumferential groove 10c is a middle circumferential groove 10m. The tread 4 shown in FIG. 1 includes a pair of the center circumferential grooves 10c and a pair of the middle circumferential grooves 10m located axially outward of the center circumferential grooves 10c.

The tread 4 may have a circumferential groove 10 including the equator. In this case, the circumferential groove 10 including the equator is the center circumferential groove 10c.

In a zone from the equator to the first end TE1 (hereinafter, also referred to as first zone), the second end TE2 side is the equator side, and in a zone from the equator to the second end TE2 (hereinafter, also referred to as second zone), the first end TE1 side is the equator side. For example, the edge 16 on the first end TE1 side of the middle circumferential groove 10m in the first zone corresponds to the edge 16 on the second end TE2 side of the middle circumferential groove 10m in the second zone.

Among the five land portions 12, the land portion 12 including the equator is a crown land portion 12c. The land portion 12 closest to the crown land portion 12c is a middle land portion 12m. The middle land portion 12m is the land portion 12 closest to the equator after the crown land portion 12c. The land portion 12 located axially outward of the middle land portion 12m is a shoulder land portion 12s. The shoulder land portion 12s includes the end TE of the tread surface 6. In the tread 4, the shoulder land portion 12s is the land portion 12 closest to the crown land portion 12c after the middle land portion 12m. The shoulder land portion 12s is the land portion 12 closest to the equator after the middle land portion 12m.

In the tread 4, another land portion 12 may be further provided axially outward of the shoulder land portion 12s with a circumferential groove 10 therebetween. In this case, the other land portion 12 located axially outward of the shoulder land portion 12s includes the end TE of the tread surface 6. Still another land portion 12 may be provided between the shoulder land portion 12s and the other land portion 12.

The tread 4 shown in FIG. 1 includes the crown land portion 12c, a pair of the middle land portions 12m located axially outward of the crown land portion 12c, and a pair of the shoulder land portions 12s located axially outward of the middle land portions 12m.

In the case where the tread 4 has a circumferential groove 10 including the equator, the land portion 12 closest to the equator is the crown land portion 12c.

The top surface of each land portion 12 forms a part of the tread surface 6. The above-described edges 16 are each the boundary between the top surface of the land portion 12 and the circumferential groove 10. The width of the land portion 12 is represented as the distance in the axial direction from the edge 16 on the first end TE1 side to the edge 16 on the second end TE2 side of the land portion 12. The width of each shoulder land portion 12s including the end TE of the tread surface 6 is represented as the distance in the axial direction from the end TE of the tread surface 6 to the edge 16 on the equator side of the top surface of the shoulder land portion 12s. In the case where the width of the land portion 12 varies in the circumferential direction, the width of the land portion 12 is represented using the maximum width.

In FIG. 1, a length indicated by reference character Wc is the width of the crown land portion 12c. A length indicated by reference character Wm is the width of the middle land portion 12m. A length indicated by reference character Ws is the width of the shoulder land portion 12s.

The width of each land portion 12 is determined as appropriate in consideration of grip performance and wet performance. In the tread 4 shown in FIG. 1, the ratio (Wc/TW) of the width Wc of the crown land portion 12c to the width TW of the tread surface 6 is preferably not less than 0.10 and not greater than 0.20. The ratio (Wm/TW) of the width Wm of the middle land portion 12m to the width TW of the tread surface 6 is preferably not less than 0.10 and not greater than 0.20. The ratio (Ws/TW) of the width Ws of the shoulder land portion 12s to the width TW of the tread surface 6 is preferably not less than 0.10 and not greater than 0.25.

In the tread 4 shown in FIG. 1, lateral grooves 18 are formed on the crown land portion 12c and the middle land portions 12m. The groove width of each lateral groove 18 is not less than 0.5 mm and not greater than 3.5 mm. The lateral groove 18 is shallower than the circumferential groove 10. The ratio of the groove depth of the lateral groove 18 to the groove depth of the circumferential groove 10 is preferably not less than 0.12 and not greater than 0.32.

A crown lateral groove 18c is formed on the crown land portion 12c. The crown lateral groove 18c traverses the crown land portion 12c. The crown lateral groove 18c extends between the center circumferential groove 10c on the first end TE1 side and the center circumferential groove 10c on the second end TE2 side.

By forming a plurality of crown lateral grooves 18c on the crown land portion 12c, a plurality of blocks 20 (hereinafter, also referred to as crown blocks 20c) are formed so as to be aligned in the circumferential direction. The plurality of crown lateral grooves 18c divide a portion including the top surface of the crown land portion 12c, into the plurality of crown blocks 20c.

Although not described in detail, the pitch of the crown lateral grooves 18c on the crown land portion 12c is set as appropriate according to the specifications of the tire 2.

Each crown lateral groove 18c shown in FIG. 1 includes a center portion 18cc having a large inclination angle and a pair of side portions 18cs located on both sides of the center portion 18cc and having a small inclination angle. Preferably, an angle of each edge of each side portion 18cs with respect to the axial direction is not less than 15 degrees, and an angle of each edge of the center portion 18cc with respect to the axial direction is not greater than 30 degrees.

A plurality of lateral grooves 18 (hereinafter, also referred to as middle lateral grooves 18m) are formed on each middle land portion 12m. In each middle lateral groove 18m shown in FIG. 1, the contours of the edges thereof are represented by arcs. The middle lateral groove 18m is curved in an arc shape. Although not shown, the centers of these arcs are located in a region axially outward of the center of the width of the middle land portion 12m.

Each middle lateral groove 18m traverses the middle land portion 12m. The middle lateral groove 18m extends between the center circumferential groove 10c and the middle circumferential groove 10m.

The middle lateral groove 18m has the same groove depth as that of the crown lateral groove 18c. The middle lateral groove 18m may be shallower or deeper than the crown lateral groove 18c.

By forming the plurality of middle lateral grooves 18m on each middle land portion 12m, a plurality of blocks 20 (hereinafter, also referred to as middle blocks 20m) are formed so as to be aligned in the circumferential direction. The plurality of middle lateral grooves 18m divide a portion including the top surface of the middle land portion 12m, into the plurality of middle blocks 20m. The middle lateral groove 18m is present between the middle blocks 20m adjacent to each other in the circumferential direction.

The pitch of the middle lateral grooves 18m on the middle land portion 12m is the same as the pitch of the crown lateral grooves 18c on the crown land portion 12c.

In addition to the middle lateral grooves 18m, each middle land portion 12m has a longitudinal groove 22 (hereinafter, also referred to as middle longitudinal groove 22m). The middle land portion 12m has the middle lateral grooves 18m and the middle longitudinal groove 22m. The middle longitudinal groove 22m continuously extends in the circumferential direction. The groove width of the middle longitudinal groove 22m is not less than 1.0 mm and not greater than 4.0 mm. The middle longitudinal groove 22m is shallower than the circumferential groove 10. The ratio of the groove depth of the middle longitudinal groove 22m to the groove depth of the circumferential groove 10 is preferably not less than 0.12 and not greater than 0.32.

As described above, each middle land portion 12m includes the plurality of middle blocks 20m. The middle longitudinal groove 22m divides each middle block 20m (specifically, a portion including the top surface of the middle block 20m) into two sub-middle blocks 24m.

The middle longitudinal groove 22m includes first middle longitudinal grooves 26 and second middle longitudinal grooves 28.

Each first middle longitudinal groove 26 extends straight. The first middle longitudinal groove 26 is inclined with respect to the circumferential direction. Each second middle longitudinal groove 28 is also inclined with respect to the circumferential direction. However, the second middle longitudinal groove 28 is inclined in a direction opposite to the direction of the inclination of the first middle longitudinal groove 26. In the circumferential direction, the first middle longitudinal grooves 26 and the second middle longitudinal grooves 28 are arranged alternately.

Each of the first middle longitudinal grooves 26 and the second middle longitudinal grooves 28 intersects the middle lateral groove 18m. Each second middle longitudinal groove 28 intersects the middle lateral groove 18m located next to the middle lateral groove 18m that the first middle longitudinal groove 26 intersects. The first middle longitudinal grooves 26 and the second middle longitudinal grooves 28 alternately intersect the plurality of middle lateral grooves 18m aligned in the circumferential direction.

The first middle longitudinal grooves 26 and the second middle longitudinal grooves 28 intersect the middle lateral grooves 18m at the center in the axial direction of the middle land portion 12m.

As shown in FIG. 1, unlike the crown land portion 12c and each middle land portion 12m, no lateral groove 18 is formed on each shoulder land portion 12s. A plurality of lateral grooves 18 may be formed on each shoulder land portion 12s.

In the present invention, among the plurality of circumferential grooves 10 formed on the tread 4, the circumferential groove 10 located between each middle land portion 12m and each shoulder land portion 12s is also referred to as shoulder circumferential groove 10s. In the tread 4 shown in FIG. 1, among the four circumferential grooves 10 formed on the tread 4, each middle circumferential groove 10m is the circumferential groove 10 located between the middle land portion 12m and the shoulder land portion 12s. In the tread 4, each middle circumferential groove 10m is also the shoulder circumferential groove 10s.

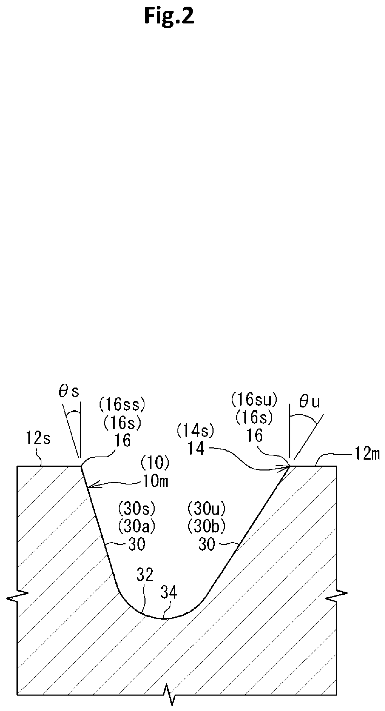

FIG. 2 is a cross-sectional view of the middle circumferential groove 10m taken along a line II-II in FIG. 1. In FIG. 2, the left side of the drawing sheet is the first end TE1 side of the tread surface 6. The configuration of each circumferential groove 10 will be described using the cross-section of the middle circumferential groove 10m. In FIG. 1, the line II-II extends in the axial direction. In FIG. 1, the upper side of the drawing sheet corresponds to the radially outer side of the tire 2, and the lower side of the drawing sheet corresponds to the radially inner side of the tire 2.

Each circumferential groove 10 includes a pair of groove walls 30 and a groove bottom portion 32.

The pair of groove walls 30 include the above-described groove opening 14. In other words, the pair of groove walls 30 include the edges 16 included in the groove opening 14, respectively. Of the pair of groove walls 30, the groove wall 30 on the first end TE1 side of the tread surface 6 is a first groove wall 30a, and the groove wall 30 on the second end TE2 side of the tread surface 6 is a second groove wall 30b. In the above-described first zone, the first groove wall 30a is also referred to as outer groove wall 30s, and the second groove wall 30b is also referred to as inner groove wall 30u. In the second zone, the first groove wall 30a is also referred to as inner groove wall 30u, and the second groove wall 30b is also referred to as outer groove wall 30s.

In each of the first zone and the second zone, the outer groove wall 30s is the groove wall 30 located on the end TE side of the tread surface 6, and the inner groove wall 30u is the groove wall 30 located on the equator side.

The groove bottom portion 32 extends between the pair of groove walls 30. The groove bottom portion 32 includes a groove bottom 34. The groove bottom 34 is at the deepest position in the cross-section of the circumferential groove 10. The distance from a line segment connecting the left and right edges 16 of the circumferential groove 10 to the groove bottom portion 32 is measured along a normal line of this line segment. The location where the distance from the line segment to the groove bottom portion 32 becomes maximum is the groove bottom 34.

The groove bottom portion 32 shown in FIG. 2 is a curved surface. In other words, the contour of the groove bottom portion 32 is an arc. The groove bottom portion 32 may include a flat surface, and this flat surface may include the groove bottom 34. In this case, the center of the width of the flat surface is used as the groove bottom 34.

In the tread 4 shown in FIG. 1, two center circumferential grooves 10c are located between the middle land portion 12m on the first end TE1 side of the tread surface 6 and the middle land portion 12m on the second end TE2 side of the tread surface 6.

As shown in FIG. 1, each center circumferential groove 10c has a narrower groove width than each middle circumferential groove 10m. The center circumferential groove 10c is also referred to as circumferential narrow groove 36. Among the plurality of circumferential grooves 10 formed on the tread 4, the circumferential grooves 10 located between the middle land portion 12m on the first end TE1 side of the tread surface 6 and the middle land portion 12m on the second end TE2 side of the tread surface 6 are the circumferential narrow grooves 36.

The above-described middle circumferential grooves 10m are the circumferential grooves 10 located between the middle land portions 12m and the ends TE of the tread surface 6. The circumferential grooves 10 located between the middle land portions 12m and the ends TE of the tread surface 6 are also referred to as circumferential wide grooves 38 to distinguish these circumferential grooves 10 from the circumferential narrow grooves 36. In the tread 4 shown in FIG. 1, one circumferential wide groove 38 is located between each middle land portion 12m and each end TE of the tread surface 6. Although not shown, a plurality of circumferential wide grooves 38 may be provided between each middle land portion 12m and each end TE of the tread surface 6.

In FIG. 1, a length indicated by reference character WG is the groove width of the circumferential wide groove 38. The groove width WG is preferably, for example, not less than 4.0% and not greater than 10.0% of the width TW of the tread surface 6. The groove depth of the circumferential wide groove 38 is preferably, for example, not less than 10 mm and not greater than 21 mm. From the viewpoint that the tire 2 can exhibit good wet performance, the groove depth is more preferably not less than 13 mm and not greater than 18 mm.

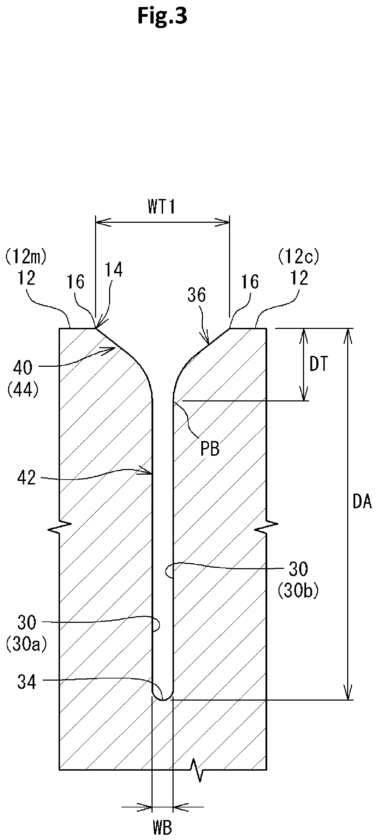

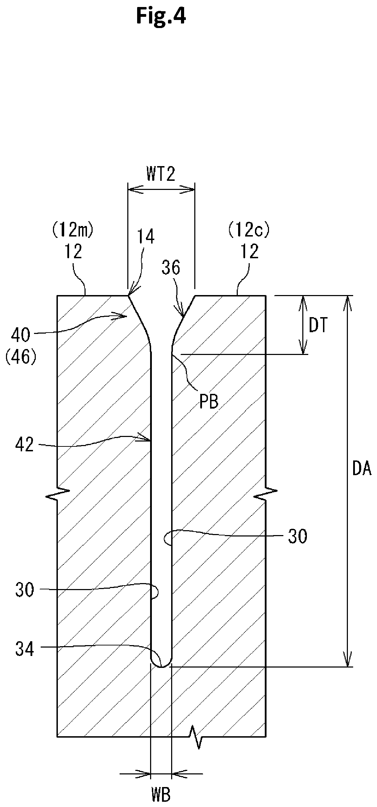

FIG. 3 and FIG. 4 show a cross-section of the circumferential narrow groove 36. FIG. 3 shows a cross-section of the circumferential narrow groove 36 taken along a line III-III in FIG. 1, and FIG. 4 shows a cross-section of the circumferential narrow groove 36 taken along a line IV-IV in FIG. 1. In FIG. 1, the line III-III and the line IV-IV extend in the axial direction.

In FIG. 3 and FIG. 4, the left side of the drawing sheet is the first end TE1 side of the tread surface 6. The land portion 12 located on the left side of the circumferential narrow groove 36 is the middle land portion 12m, and the land portion 12 located on the right side of the circumferential narrow groove 36 is the crown land portion 12c. The upper side of the drawing sheet corresponds to the radially outer side of the tire 2, and the lower side of the drawing sheet corresponds to the radially inner side of the tire 2.

The circumferential narrow groove 36 includes a tapered portion 40 and a body portion 42. The tapered portion 40 includes the groove opening 14. The tapered portion 40 is tapered inward from the groove opening 14. The body portion 42 includes the groove bottom 34. In the circumferential narrow groove 36 shown in FIG. 3 and FIG. 4, the body portion 42 extends straight.

In FIG. 3 and FIG. 4, reference character PB is the boundary between the tapered portion 40 and the body portion 42. In the cross-section of the circumferential narrow groove 36, the contour of each groove wall 30 at the body portion 42 is represented by a straight line. In the present invention, the position where the contour line of the groove wall 30 at the tapered portion 40 converges with the straight line representing the contour of the body portion 42 is the boundary PB between the tapered portion 40 and the body portion 42.

In FIG. 3 and FIG. 4, a length indicated by reference character WB is the width of the body portion 42. The width WB is represented as the distance in the axial direction (specifically, the shortest distance) from the first groove wall 30a to the second groove wall 30b at the body portion 42.

The width WB of the body portion 42 of the circumferential narrow groove 36 is narrow. When the tire 2 comes into contact with a road surface, the tread 4 is deformed. Accordingly, the pair of groove walls 30 come into contact with each other at the body portion 42. Since the land portions 12 support each other, deformation of the land portions 12 is suppressed. The tire 2 can have reduced rolling resistance. The apparent stiffness of the land portions 12 is increased, so that the tire 2 can have improved wear resistance.

As shown in FIG. 3 and FIG. 4, the tapered portion 40 is present between the top surface of each land portion 12 and the body portion 42 of the circumferential narrow groove 36. The force acting on the edge 16 of the top surface of each land portion 12 is reduced as compared to the case where the tapered portion 40 is not provided. The tapered portion 40 suppresses concentration of stress on the edges 16. Damage such as chipping is less likely to occur at the edges 16 of the land portions 12. The tire 2 can reduce the risk of damage to each land portion edge.

The tapered portion 40 increases the groove volume of the circumferential narrow groove 36. Even though the groove widths of the circumferential grooves 10 between the left and right middle land portions 12m are made narrower and the land portions 12 are arranged closer to each other, the tire 2 can exhibit good wet performance.

As shown in FIG. 1, each circumferential narrow groove 36 is provided with portions in which the groove opening 14 is wide and portions in which the groove opening 14 is narrow. The portions in which the groove opening 14 is wide are also referred to as wide portions 44, and the portions in which the groove opening 14 is narrow are also referred to as narrow portions 46. The groove opening 14 at each wide portion 44 is wider than the groove opening 14 at each narrow portion 46.

As described above, the tapered portion 40 includes the groove opening 14. The tapered portion 40 includes the wide portions 44 in which the groove opening 14 is wide and the narrow portions 46 in which the groove opening 14 is narrow. As shown in FIG. 1, the wide portions 44 and the narrow portions 46 are arranged alternately in the circumferential direction.

Compared to a tire in which the tapered portion 40 is composed of the wide portion 44 over the entire circumference of the circumferential narrow groove 36, the tire 2 can increase the stiffness of each land portion 12 The influence of the wide portions 44 on rolling resistance and wear resistance is suppressed.

Compared to a tire in which the tapered portion 40 is composed of the narrow portion 46 over the entire circumference of the circumferential narrow groove 36, the tire 2 can decrease the stiffness of each land portion 12, and the groove volume can be ensured. The influence of the narrow portions 46 on the risk of damage to each land portion edge and wet performance is suppressed.

The tire 2 can reduce the risk of damage to each land portion edge and can exhibit good wet performance while suppressing an increase in rolling resistance and a decrease in wear resistance.

As shown in FIG. 1, the wide portions 44 of the circumferential narrow groove 36 on the first end TE1 side of the tread surface 6 overlap the narrow portions 46 of the circumferential narrow groove 36 on the second end TE2 side in the axial direction. The narrow portions 46 of the circumferential narrow groove 36 on the first end TE1 side overlap the wide portions 44 of the circumferential narrow groove 36 on the second end TE2 side in the axial direction. Accordingly, the tire 2 can effectively suppress stiffness variation of the crown land portion 12c and the middle land portions 12m in the circumferential direction. The tire 2 can effectively reduce the risk of damage to each land portion edge and can effectively exhibit good wet performance while suppressing an increase in rolling resistance and a decrease in wear resistance. From this viewpoint, in the two adjacent circumferential narrow grooves 36, preferably, the wide portions 44 of the circumferential narrow groove 36 on the first end TE1 side of the tread surface 6 overlap the narrow portions 46 of the circumferential narrow groove 36 on the second end TE2 side in the axial direction.

As shown in FIG. 1, each crown lateral groove 18c extends between the narrow portion 46 of the circumferential narrow groove 36 on the first end TE1 side and the narrow portion 46 of the circumferential narrow groove 36 on the second end TE2 side, and each middle lateral groove 18m extends between the wide portion 44 of the circumferential narrow groove 36 and the middle circumferential groove 10m (i.e., the circumferential wide groove 38). Accordingly, water existing between the tread 4 and a road surface is effectively drained. In addition to the circumferential narrow grooves 36, the crown lateral grooves 18c and the middle lateral grooves 18m can effectively serve as an edge component that scratches a road surface. Even though the groove widths of the circumferential grooves 10 between the left and right middle land portions 12m are made narrower and the land portions 12 are arranged closer to each other, the tire 2 can have improved wet performance. From this viewpoint, preferably, the land portion 12 having the circumferential narrow grooves 36 on both the first end TE1 side and the second end TE2 side of the tread surface 6 is provided with the lateral grooves 18 each extending between the narrow portion 46 of the circumferential narrow groove 36 on the first end TE1 side and the narrow portion 46 of the circumferential narrow groove 36 on the second end TE2 side, and the land portion 12 located between each circumferential narrow groove 36 and each circumferential wide groove 38 is provided with the lateral grooves 18 each extending between the wide portion 44 of the circumferential narrow groove 36 and the circumferential wide groove 38.

As described above, in addition to the middle lateral grooves 18m, each middle land portion 12m is provided with the middle longitudinal groove 22m extending in the circumferential direction. The middle longitudinal groove 22m also serves as an edge component. Due to the synergistic effect of the middle lateral grooves 18m and the middle longitudinal groove 22m, the tire 2 can have improved wet performance. From this viewpoint, in the case where the land portion 12 located between each circumferential narrow groove 36 and each circumferential wide groove 38 is provided with the lateral grooves 18 each extending between the wide portion 44 of the circumferential narrow groove 36 and the circumferential wide groove 38, the longitudinal groove 22 continuously extending in the circumferential direction is more preferably provided.

The cross-section of the circumferential narrow groove 36 shown in FIG. 3 is a cross-section of the circumferential narrow groove 36 in which the tapered portion 40 is the wide portion 44. In FIG. 3, a length indicated by reference character WT1 is the width of the groove opening 14 at the wide portion 44. The width WT1 is the distance in the axial direction between the pair of edges 16 included in the groove opening 14 at the wide portion 44. In the present invention, the distance WT1 in the axial direction is the groove width of the wide portion 44.

The cross-section of the circumferential narrow groove 36 shown in FIG. 4 is a cross-section of the circumferential narrow groove 36 in which the tapered portion 40 is the narrow portion 46. In FIG. 4, a length indicated by reference character WT2 is the width of the groove opening 14 at the narrow portion 46. The width WT2 is the distance in the axial direction between the pair of edges 16 included in the groove opening 14 at the narrow portion 46. In the present invention, the distance WT2 in the axial direction is the groove width of the narrow portion 46.

In FIG. 1, the portions in which the width of the groove opening 14 is maintained as the constant width WT1 are the wide portions 44, and the portions in which the width of the groove opening 14 is maintained as the constant width WT2 are the narrow portions 46. The portions in which the width of the groove opening 14 changes from the width WT1 to the width WT2, that is, the portions between the wide portions 44 and the narrow portions 46, are boundary portions.

In the tire 2, from the viewpoint of being able to effectively suppress stiffness variation of the crown land portion 12c and the middle land portions 12m in the circumferential direction, the wide portions 44 and the narrow portions 46 preferably have the same length in the circumferential direction.

In the tire 2, the ratio (WT1/WT2) of the groove width WT1 of each wide portion 44 to the groove width WT2 of each narrow portion 46 is preferably not greater than 3.0. Accordingly, the difference between the groove width WT1 and the groove width WT2 is appropriately maintained. Concentration of stress on the boundary portion between the wide portion 44 and the narrow portion 46 is suppressed. The tire 2 can effectively inhibit uneven wear from locally occurring. The tire 2 can have improved wear resistance. From this viewpoint, the ratio (WT1/WT2) is more preferably not greater than 2.5.

As described above, the groove opening 14 at each wide portion 44 is wider than the groove opening 14 at each narrow portion 46. From the viewpoint that the wide portion 44 can effectively contribute to reducing the risk of damage to each land portion edge and exhibiting good wet performance, and the narrow portion 46 can effectively suppress an increase in rolling resistance and a decrease in wear resistance, the ratio (WT1/WT2) is preferably not less than 1.1 and more preferably not less than 1.5.

The width WB of the body portion 42 of each circumferential narrow groove 36 is not less than 0.3 mm and not greater than 3.0 mm.

When the width WB of the body portion 42 is set to be not less than 0.3 mm, the land portions 12 are inhibited from coming into contact with each other when the tire 2 is inflated. Since the tire 2 can be properly inflated, the profile of the tread surface 6 is formed as a proper profile. The tire 2 can suppress occurrence of uneven wear due to profile irregularities. The tire 2 can maintain good wear resistance. From this viewpoint, the width WB of the body portion 42 is more preferably not less than 0.7 mm.

When the width WB of the body portion 42 is set to be not greater than 3.0 mm, the land portions 12 can come into contact with each other to support each other when the tread 4 comes into contact with a road surface. Since deformation of the land portions 12 is suppressed, the tire 2 can have reduced rolling resistance. Since the apparent stiffness of the land portions 12 is increased, the tire 2 can also have improved wear resistance. From this viewpoint, the width WB of the body portion 42 is more preferably not greater than 2.5 mm.

In FIG. 3 and FIG. 4, a length indicated by reference character DA is the groove depth of the circumferential narrow groove 36. A length indicated by reference character DT is the depth of the tapered portion 40. The depth DT of the tapered portion 40 is represented as the shortest distance from a line segment connecting the left and right edges 16 to the boundary PB between the tapered portion 40 and the body portion 42. The groove depth DA of the circumferential narrow groove 36 and the depth DT of the tapered portion 40 at the wide portion 44 are the same as those at the narrow portion 46.

The ratio (DT/DA) of the depth DT of the tapered portion 40 to the groove depth DA of the circumferential narrow groove 36 is preferably not less than 0.05 and not greater than 0.30.

When the ratio (DT/DA) is set to be not less than 0.05, the tapered portion 40 can contribute to increasing the groove volume of the circumferential narrow groove 36. Even though the groove widths of the circumferential grooves 10 between the left and right middle land portions 12m are made narrower and the land portions 12 are arranged closer to each other, the tire 2 can exhibit good wet performance. From this viewpoint, the ratio (DT/DA) is more preferably not less than 0.10.

When the ratio (DT/DA) is set to be not greater than 0.30, the stiffness of the land portions 12 is appropriately maintained. The tire 2 can suppress an increase in rolling resistance and can maintain good wear resistance. From this viewpoint, the ratio (DT/DA) is more preferably not greater than 0.25.

As described above, each middle circumferential groove 10m is the circumferential groove 10 located between the middle land portion 12m and the shoulder land portion 12s, and is also the shoulder circumferential groove 10s. The inner groove wall 30u shown in FIG. 2 is the groove wall 30 located on the equator side, out of the pair of groove walls 30 of the shoulder circumferential groove 10s.

As shown in FIG. 2, the inner groove wall 30u of the shoulder circumferential groove 10s is inclined with respect to a normal line of the tread surface 6 at the groove opening 14. In FIG. 2, an angle θu is the inclination angle of the inner groove wall 30u.

An edge 16su located on the equator side, out of a pair of edges 16s included in a groove opening 14s of the shoulder circumferential groove 10s, is also an edge of the top surface of the middle land portion 12m.

As described above, in the tire 2, the groove widths of the circumferential grooves 10 between the left and right middle land portions 12m are made narrower and the land portions 12 are arranged closer to each other. Therefore, stress is likely to be concentrated on the edge 16su, which is also the edge of the top surface of the middle land portion 12m, so that there is a concern that damage such as chipping may occur at the edge 16su.

In the tire 2, however, as described above, the inner groove wall 30u of the shoulder circumferential groove 10s is inclined with respect to the normal line of the tread surface 6 at the groove opening 14. Concentration of stress on the edge 16su is suppressed. The tire 2 can effectively suppress occurrence of damage at the edge of the top surface of the middle land portion 12m. From this viewpoint, the inclination angle θu of the inner groove wall 30u is not less than 10 degrees and preferably not less than 15 degrees.

As shown in FIG. 2, the outer groove wall 30s of the shoulder circumferential groove 10s is also inclined with respect to a normal line of the tread surface 6 at the groove opening 14. In FIG. 2, an angle θs is the inclination angle of the outer groove wall 30s.

As shown in FIG. 2, the inclination angle θs of the outer groove wall 30s is smaller than the inclination angle θu of the inner groove wall 30u. Accordingly, the tire 2 can ensure the area of the top surface of the shoulder land portion 12s. The stiffness of the shoulder land portion 12s is maintained, so that a decrease in wear resistance is suppressed. From the viewpoint of being able to suppress occurrence of damage at the edge of the top surface of the middle land portion 12m and to suppress a decrease in wear resistance, the inclination angle θs of the outer groove wall 30s is smaller than the inclination angle θu of the inner groove wall 30u, and the inclination angle θu of the inner groove wall 30u is not less than 10 degrees.

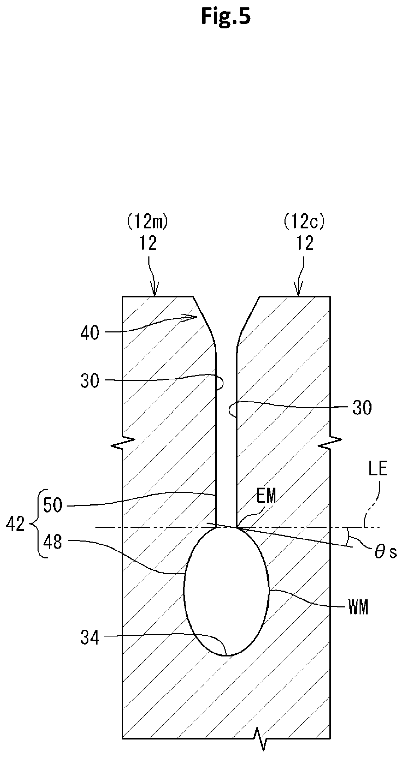

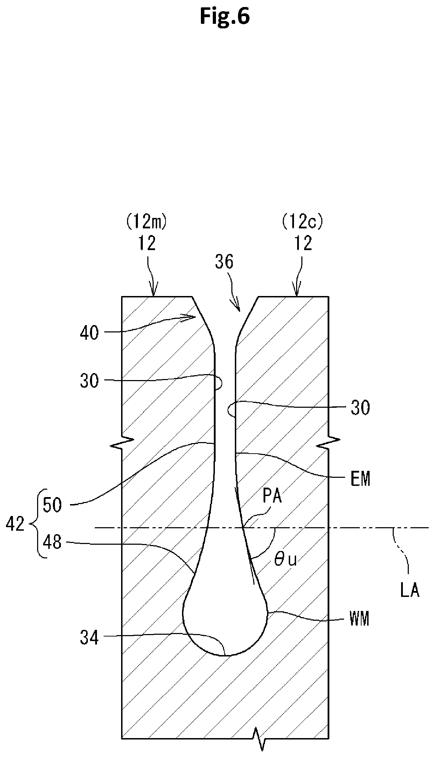

FIG. 5 shows a modification of the circumferential narrow groove 36. FIG. 6 shows another modification of the circumferential narrow groove 36. The circumferential narrow grooves 36 shown in FIG. 5 and FIG. 6 are each the circumferential narrow groove 36 at the narrow portion 46, and correspond to the circumferential narrow groove 36 shown in FIG. 4.

As shown in FIG. 5 and FIG. 6, the body portion 42 of the circumferential narrow groove 36 can have an enlarged-width portion 48 on the groove bottom 34 side. Although not shown, in the case where the body portion 42 has an enlarged-width portion 48, in each wide portion 44 of the circumferential narrow groove 36 as well, the body portion 42 of the circumferential narrow groove 36 similarly has an enlarged-width portion 48 on the groove bottom 34 side.

In each of the circumferential narrow grooves 36 shown in FIG. 5 and FIG. 6, the portion other than the enlarged-width portion 48 has the same configuration as the circumferential narrow groove 36 shown in FIG. 3 and FIG. 4.

In each of the circumferential narrow grooves 36 shown in FIG. 5 and FIG. 6, the portion of the body portion 42 other than the enlarged-width portion 48 is also referred to as main body portion 50. The body portion 42 of the circumferential narrow groove 36 has the main body portion 50 and the enlarged-width portion 48. In FIG. 5 and FIG. 6, a position indicated by reference character EM is the boundary between the main body portion 50 and the enlarged-width portion 48. Although not described in detail, the width of the main body portion 50 is the same as the width WB of the body portion 42 of the circumferential narrow groove 36 shown in FIG. 3 and FIG. 4.

In FIG. 5 and FIG. 6, a position indicated by reference character WM is a position at which the body portion 42 has a maximum width. In each of the circumferential narrow grooves 36 shown in FIG. 5 and FIG. 6, the body portion 42 has a maximum width at the enlarged-width portion 48. The enlarged-width portion 48 is wider than the main body portion 50.

The enlarged-width portion 48 contributes to increasing the groove volume of the circumferential narrow groove 36. The circumferential narrow groove 36 having the enlarged-width portion 48 allows water existing between a road surface and the tread surface 6 to be effectively drained as compared to a circumferential narrow groove 36 not having the enlarged-width portion 48. Even though the groove widths of the circumferential grooves 10 between the left and right middle land portions 12m are made narrower and the land portions 12 are arranged closer to each other, the tire 2 can exhibit good wet performance. From this viewpoint, preferably, the body portion 42 has the enlarged-width portion 48 on the groove bottom 34 side, and the body portion 42 has a maximum width at the enlarged-width portion 48.

In FIG. 5 and FIG. 6, a portion on the groove bottom 34 side from the maximum width position WM (hereinafter, the groove bottom side of the enlarged-width portion 48) has a shape that projects radially inward. The groove bottom side of the enlarged-width portion 48 has a rounded contour. In a portion on the tapered portion 40 side from the maximum width position WM (hereinafter, the tapered portion side of the enlarged-width portion 48), the distance between the left and right groove walls 30 gradually increases from the boundary EM toward the maximum width position WM.

In FIG. 5, the tapered portion side of the enlarged-width portion 48 is curved so as to bulge outward from the inside of the enlarged-width portion 48. Meanwhile, in FIG. 6, the tapered portion side of the enlarged-width portion 48 is curved so as to be recessed inward from the outside of the enlarged-width portion 48. The tapered portion side of the enlarged-width portion 48 shown in each of FIG. 5 and FIG. 6 contributes to increasing the groove volume. Water existing between a road surface and the tread surface 6 is effectively drained. Even though the groove widths of the circumferential grooves 10 between the left and right middle land portions 12m are made narrower and the land portions 12 are arranged closer to each other, the tire 2 can exhibit good wet performance. Since the force acting on the tapered portion side is effectively distributed, damage to the circumferential narrow groove 36 at the enlarged-width portion 48 is suppressed. The circumferential narrow groove 36 can stably exhibit its function. From this viewpoint, the tapered portion side of the enlarged-width portion 48 is preferably curved so as to be recessed inward from the outside of the enlarged-width portion 48 or curved so as to bulge outward from the inside of the enlarged-width portion 48.

In FIG. 5, an alternate long and two short dashes line LE represents a virtual wear surface when the circumferential narrow groove 36 is worn to the boundary EM. When the circumferential narrow groove 36 is worn to the boundary EM, the boundary EM forms the groove opening of the worn circumferential narrow groove 36.

In FIG. 5, an angle θs is an angle of a tangent line of the enlarged-width portion 48 at the boundary EM with respect to the virtual wear surface LE.

In FIG. 6, an alternate long and two short dashes line LA represents a virtual wear surface when worn to the same position as the boundary EM of the circumferential narrow groove 36 shown in FIG. 5. A position indicated by reference character PA is the point of intersection of the virtual wear surface LA and the enlarged-width portion 48. When the circumferential narrow groove 36 is worn to the position PA, the position PA forms the groove opening of the worn circumferential narrow groove 36.

In FIG. 6, an angle θu is an angle of a tangent line of the enlarged-width portion 48 at the position PA with respect to the virtual wear surface LA.

In the enlarged-width portion 48 of the circumferential narrow groove 36 shown in FIG. 5, the inclination angle at the groove opening of the worn circumferential narrow groove 36 becomes a minimum inclination angle θs at the boundary EM.

Meanwhile, in the enlarged-width portion 48 of the circumferential narrow groove 36 shown in FIG. 6, the inclination angle at the groove opening of the worn circumferential narrow groove 36 gradually decreases from the boundary EM toward the maximum width position WM. The inclination angle becomes minimum around the maximum width position WM. However, this minimum value of the inclination angle, as well as the inclination angle θu at the position PA, is larger than the minimum inclination angle θs at the position EM shown in FIG. 5.

In the circumferential narrow groove 36 shown in FIG. 6, damage such as chipping at the groove opening of the worn circumferential narrow groove 36 is less likely to occur as compared to the circumferential narrow groove 36 shown in FIG. 5. From this viewpoint, the tapered portion side of the enlarged-width portion 48 is more preferably curved so as to be recessed inward from the outside of the enlarged-width portion 48.

As is obvious from the above description, according to the present invention, a heavy duty tire that can achieve reduction of the risk of damage to each land portion edge and improvement of wet performance while suppressing an increase in rolling resistance and a decrease in wear resistance, is obtained. The present invention exhibits a remarkable effect in a tire mounted to a trailer axle that is provided to a vehicle so as to be freely rotatable.

The above-described technology capable of achieving reduction of the risk of damage to each land portion edge and improvement of wet performance while suppressing an increase in rolling resistance and a decrease in wear resistance can be applied to various tires.

## Claims

1. A heavy duty tire (2) comprising a tread (4) having a tread surface (6) configured to come into contact with a road surface, wherein
the tread (4) has a plurality of circumferential grooves (10, 10c, 10m, 10s) continuously extending in a circumferential direction,
the plurality of circumferential grooves (10, 10c, 10m, 10s) divide the tread (4) into a plurality of land portions (12, 12c, 12m, 12s) aligned in an axial direction,
among the plurality of land portions (12, 12c, 12m, 12s), a land portion (12) including an equator or a land portion (12) closest to the equator is a crown land portion (12c), and a land portion (12) closest to the crown land portion (12c) is a middle land portion (12m),
the plurality of circumferential grooves (10, 10c, 10m, 10s) each have a pair of groove walls (30, 30a, 30b, 30s, 30u) including a groove opening (14, 14s), and a groove bottom portion (32) including a groove bottom (34),
among the plurality of circumferential grooves (10, 10c, 10m, 10s), a circumferential groove (10) located between a middle land portion (12m) on a first end (TE1) side of the tread surface (6) and a middle land portion (12m) on a second end (TE2) side of the tread surface (6) is a circumferential narrow groove (36),
the circumferential narrow groove (36) includes a tapered portion (40) including the groove opening (14), and a body portion (42) including the groove bottom (34), wherein the body portion (42) has a width (WB) of not less than 0.3 mm and not greater than 3.0 mm,
the tapered portion (40) is tapered inward from the groove opening (14),
the pair of groove walls (30, 30a, 30b, 30s, 30u) come into contact with each other at the body portion (42) when a load equivalent to a standardized load of the tire (2) is applied to the tire (2) and the tire (2) is brought into contact with a road surface composed of a flat surface in a state where the camber angle of the tire (2) in a standardized state is set to 0°,
the tapered portion (40) includes wide portions (44) in which the groove opening (14) is wide, and narrow portions (46) in which the groove opening (14) is narrow,
the wide portions (44) and the narrow portions (46) are arranged alternately in the circumferential direction,
among the plurality of land portions (12, 12c, 12m, 12s), a land portion (12) closest to the equator after the middle land portion (12m) is a shoulder land portion (12s),
among the plurality of circumferential grooves (10, 10c, 10m, 10s), a circumferential groove (10) located between the middle land portion (12m) and the shoulder land portion (12s) is a shoulder circumferential groove (10s),
the circumferential narrow groove (36) has a narrower groove width than the shoulder circumferential groove (10s),
an inner groove wall (30u) located on the equator side, out of the pair of groove walls (30s, 30u) of the shoulder circumferential groove (10s), is inclined with respect to a normal line of the tread surface (6) at the groove opening (14s),
an inclination angle (θu) of the inner groove wall (30u) located on the equator side is not less than 10 degrees, and
an outer groove wall (30s) out of the pair of groove walls (30s, 30u) of the shoulder circumferential groove (10s) is also inclined with respect to a normal line of the tread surface (6) at the groove opening (14), **characterized in that**
the inclination angle (θs) of the outer groove wall (30s) is smaller than the inclination angle (θu) of the inner groove wall (30u).

2. The heavy duty tire (2) according to claim 1, wherein, in two adjacent circumferential narrow grooves (36), the wide portions (44) of the circumferential narrow groove (36) on the first end (TE1) side of the tread surface (6) overlap the narrow portions (46) of the circumferential narrow groove (36) on the second end (TE2) side of the tread surface (6) in the axial direction.

3. The heavy duty tire (2) according to claim 1 or 2, wherein a ratio (WT1/WT2) of a groove width (WT1) of each of the wide portions (44) to a groove width (WT2) of each of the narrow portions (46) is not greater than 3.0.

4. The heavy duty tire (2) according to any one of claims 1 to 3, wherein a ratio (DT/DA) of a depth (DT) of the tapered portion (40) to a groove depth (DA) of the circumferential narrow groove (36) is not less than 0.05 and not greater than 0.30.

5. The heavy duty tire (2) according to any one of claims 1 to 4, wherein
the body portion (42) has an enlarged-width portion (48) on the groove bottom (34) side, and
the body portion (42) has a maximum width at the enlarged-width portion (48).

6. The heavy duty tire (2) according to claim 5, wherein the tapered portion (40) side of the enlarged-width portion (48) is curved so as to be recessed inward from an outside of the enlarged-width portion (48) or curved so as to bulge outward from an inside of the enlarged-width portion (48).

7. The heavy duty tire (2) according to claim 6, wherein the tapered portion (40) side of the enlarged-width portion (48) is curved so as to be recessed inward from the outside of the enlarged-width portion (48).

## Patentansprüche

1. Schwerlastreifen (2), der ein Profil (4) mit einer Lauffläche (6) umfasst, die ausgebildet ist, mit einer Straßenoberfläche in Kontakt zu gelangen, wobei
das Profil (4) mehrere umlaufende Rillen (10, 10c, 10m, 10s) aufweist, die sich kontinuierlich in einer umlaufenden Richtung erstrecken,
die mehreren umlaufenden Rillen (10, 10c, 10m, 10s) das Profil (4) in mehrere Landabschnitte (12, 12c, 12m, 12s) teilen, die in einer axialen Richtung ausgerichtet sind,
unter den mehreren Landabschnitten (12, 12c, 12m, 12s) ein Landabschnitt (12), der einen Äquator umfasst, oder ein Landabschnitt (12), der dem Äquator am nächsten ist, ein Kronenlandabschnitt (12c) ist und ein Landabschnitt (12), der dem Kronenlandabschnitt (12c) am nächsten ist, ein Mittellandabschnitt (12m) ist,
die mehreren umlaufenden Rillen (10, 10c, 10m, 10s) jeweils ein Paar von Rillenwänden (30, 30a, 30b, 30s, 30u) aufweisen, die eine Rillenöffnung (14, 14s) und einen Rillenbodenabschnitt (32) einschließlich eines Rillenbodens (34) aufweisen,
unter den mehreren umlaufenden Rillen (10, 10c, 10m, 10s) eine umlaufende Rille (10), die zwischen einem Mittellandabschnitt (12m) auf einer Seite eines ersten Endes (TE1) der Lauffläche (6) und einem Mittellandabschnitt (12m) auf einer Seite eines zweiten Endes (TE2) der Lauffläche (6) angeordnet ist, eine umlaufende enge Rille (36) ist,
die umlaufende enge Rille (36) einen abgeschrägten Abschnitt (40), der die Rillenöffnungen (14) umfasst, und einen Körperabschnitt (42) aufweist, der den Rillenboden (34) umfasst, wobei der Körperabschnitt (42) eine Breite (WB) von nicht weniger als 0,3 mm und nicht mehr als 3,0 mm aufweist,
der abgeschrägte Abschnitt (40) von der Rillenöffnung (14) nach innen abgeschrägt ist,
das Paar von Rillenwänden (30, 30a, 30b, 30s, 30u) miteinander an dem Körperabschnitt (42) in Kontakt gelangt, wenn eine Last, die zu einer standardisierten Last des Reifens (2) äquivalent ist, auf den Reifen (2) ausgeübt wird und der Reifen (2) mit einer Straßenoberfläche, die aus einer flachen Oberfläche besteht, in einem Zustand in Kontakt gebracht wird, in welchem der Sturzwinkel des Reifens (2) in einem standardisierten Zustand auf 0° eingestellt ist,
der abgeschrägte Abschnitt (40) breite Abschnitte (44), in welchen die Rillenöffnung (14) breit ist, und enge Abschnitte (46) umfasst, in welchen die Rillenöffnung (14) eng ist,
die breiten Abschnitte (44) und die engen Abschnitte (46) in der umlaufenden Richtung abwechselnd angeordnet sind,
unter den mehreren Landabschnitten (12, 12c, 12m, 12s) ein Landabschnitt (12), der dem Äquator nach dem Mittellandabschnitt (12m) am nächsten ist, ein Schulterlandabschnitt (12s) ist,
unter den mehreren umlaufenden Rillen (10, 10c, 10m, 10s) eine umlaufende Rille (10), die zwischen dem Mittellandabschnitt (12m) und dem Schulterlandabschnitt (12s) angeordnet ist, eine umlaufende Schulterrille (10s) ist,
die umlaufende enge Rille (36) eine engere Rillenbreite als die umlaufende Schulterrille (10s) aufweist,
eine innere, auf der Äquatorseite angeordnete Rillenwand (30u) von dem Paar der Rillenwände (30s, 30u) der umlaufenden Schulterrille (10s) bezogen auf eine Normalenlinie der Lauffläche (6) an der Rillenöffnung (14s) geneigt ist,
ein Neigungswinkel (θu) der inneren Rillenwand (30u), die auf der Äquatorseite angeordnet ist, nicht kleiner als 10 Grad ist und
eine äußere Rillenwand (30s) von dem Paar von Rillenwänden (30s, 30u) der Schulterumfangsrille (10s) ebenso bezogen auf eine Normalenlinie der Lauffläche (6) an der Rillenöffnung (14) geneigt ist,
**dadurch gekennzeichnet, dass**
der Neigungswinkel (θs) der äußeren Rillenwand (30s) kleiner als der Neigungswinkel (θu) der inneren Rillenwand (30u) ist.

2. Schwerlastreifen (2) nach Anspruch 1, wobei in zwei benachbarten umlaufenden engen Rillen (36) die breiten Abschnitte (44) der umlaufenden engen Rille (36) auf der Seite des ersten Endes (TE1) der Lauffläche (6) die engen Abschnitte (46) der umlaufenden engen Rille (36) auf der Seite des zweiten Endes (TE2) der Lauffläche (6) in der axialen Richtung überlagern.

3. Schwerlastreifen (2) nach Anspruch 1 oder 2, wobei ein Verhältnis (WT1/WT2) einer Rillenbreite (WT1) jedes der breiten Abschnitte (44) zu einer Rillenbreite (WT2) jedes der engen Abschnitte (46) nicht größer als 3,0 ist.

4. Schwerlastreifen (2) nach einem der Ansprüche 1 bis 3, wobei ein Verhältnis (DT/DA) einer Tiefe (DT) des abgeschrägten Abschnitts (40) zu einer Rillentiefe (DA) der umlaufenden engen Rille (36) nicht kleiner als 0,05 und nicht größer als 0,30 ist.

5. Schwerlastreifen (2) nach einem der Ansprüche 1 bis 4, wobei
der Körperabschnitt (42) einen Abschnitt (48) mit vergrößerter Breite auf der Seite des Rillenbodens (34) aufweist und
der Körperabschnitt (42) eine maximale Breite in dem Abschnitt (48) mit vergrößerter Breite aufweist.

6. Schwerlastreifen (2) nach Anspruch 5, wobei die Seite des abgeschrägten Abschnitts (40) des Abschnitts (48) mit vergrößerter Breite derart gekrümmt ist, dass er von einer Außenseite des Abschnitts (48) mit vergrößerter Breite nach innen zurückversetzt ist, oder derart gekrümmt ist, dass er von einer Innenseite des Abschnitts (48) mit vergrößerter Breite nach außen gewölbt ist.

7. Schwerlastreifen (2) nach Anspruch 6, wobei die Seite des abgeschrägten Abschnitts (40) des Abschnitts (48) mit vergrößerter Breite derart gekrümmt ist, dass er von einer Außenseite des Abschnitts (48) mit vergrößerter Breite nach innen zurückversetzt ist.

## Revendications

1. Pneumatique pour service intensif (2) comprenant une bande de roulement (4) ayant une surface de bande de roulement (6) configurée pour venir en contact avec une surface routière, dans lequel
la bande de roulement (4) a une pluralité de rainures circonférentielles (10, 10c, 10m,10s) s'étendant en continu dans une direction circonférentielle,
la pluralité de rainures circonférentielles (10, 10c, 10m, 10s) divisent la bande de roulement (4) en une pluralité de portions en relief (12, 12c, 12m,12s) alignées dans une direction axiale,
parmi la pluralité de portions en relief (12, 12c, 12m, 12s), une portion en relief (12) incluant un équateur ou une portion en relief (12) la plus proche de l'équateur est une portion en relief de couronne (12c), et une portion en relief de couronne (12) la plus proche de la portion en relief de couronne (12c) est une portion en relief médiane (12m),
la pluralité de rainures circonférentielles (10, 10c, 10m, 10s) ont chacune une paire de parois de rainure (30, 30a, 30b, 30s, 30u) incluant une ouverture de rainure (14, 14s), et une portion de fond de rainure (32) incluant un fond de rainure (34),
parmi la pluralité de rainures circonférentielles (10, 10c, 10m, 10s), une rainure circonférentielle (10) située entre une portion en relief médiane (12m) sur un côté de première extrémité (TE1) de la surface de bande de roulement (6) et une portion en relief médiane (12m) sur un côté de seconde extrémité (TE) de la surface de bande de roulement (6) est une rainure étroite circonférentielle (36),
la rainure étroite circonférentielle (36) inclut une portion effilée (40) incluant l'ouverture de rainure (14), et une portion formant corps (42) incluant le fond de rainure (34), dans lequel la portion formant corps (42) a une largeur (WB) qui n'est pas inférieure à 0,3 mm et qui n'est pas supérieure à 3,0 mm,
la portion effilée (40) est effilée vers l'intérieur depuis l'ouverture de rainure (14),
la paire de parois de rainure (30, 30a, 31b, 30s, 30u) viennent en contact l'une avec l'autre au niveau de la portion formant corps (42) quand une charge équivalente à une charge standardisée du pneumatique (2) est appliquée sur le pneumatique (2) et que le pneumatique (2) est amené en contact avec une surface routière composée d'une surface plate dans un état où l'angle de cambrure du pneumatique (2) dans un état standardisé est fixé à 0°,
la portion effilée (40) inclut des portions larges (40) dans lesquelles l'ouverture de rainure (14) est large, et des portions étroites (46) dans lesquelles l'ouverture de rainure (14) est étroite,
les portions larges (44) et les portions étroites (46) sont agencées en alternance dans la direction circonférentielle,
parmi la pluralité de portions en relief (12, 12c, 12m, 12s), une portion en relief (12) la plus proche de l'équateur après la portion en relief médiane (12m) est une portion en relief d'épaulement (12s),
parmi la pluralité de rainures circonférentielles (10, 10c, 10m,10s), une rainure circonférentielle (10) située entre la portion en relief médiane (12m) et la portion en relief d'épaulement (12s) est une rainure circonférentielle d'épaulement (10s),
la rainure étroite circonférentielle (36) a une largeur de rainure plus étroite que la rainure circonférentielle d'épaulement (10s),
une paroi de rainure intérieure (30u) située sur le côté d'équateur, parmi la paire de parois de rainure (30s, 30u) de la rainure circonférentielle d'épaulement (10s), est inclinée par rapport à une ligne normale de la surface de bande de roulement (6) au niveau de l'ouverture de rainure (14s),
un angle d'inclinaison (θu) de la paroi de rainure intérieure (30u) située sur le côté d'équateur n'est pas inférieur à 10 degrés, et
une paroi de rainure extérieure (30s) parmi la paire de parois de rainure (30s, 30u) de la rainure circonférentielle d'épaulement (10s) est également inclinée par rapport à une ligne normale de la surface de bande de roulement (6) au niveau de l'ouverture de rainure (14),
**caractérisé en ce que**
l'angle d'inclinaison (θs) de la paroi de rainure extérieure (30s) est inférieur à l'angle d'inclinaison (θu) de la paroi de rainure intérieure (30u).

2. Pneumatique pour service intensif (2) selon la revendication 1, dans lequel, dans deux rainures étroites circonférentielles adjacentes (36), les portions larges (44) de la rainure étroite circonférentielle (36) sur le côté de la première extrémité (TE1) de la surface de bande de roulement (6) sont en chevauchement avec les portions étroites (46) de la rainure étroite circonférentielle (36) sur le côté de la seconde extrémité (TE2) de la surface de bande de roulement (6) dans la direction axiale.

3. Pneumatique pour service intensif (2) selon la revendication 1 ou 2, dans lequel un rapport (WT1/WT2) d'une largeur de rainure (WT1) de chacune des portions larges (44) sur une largeur de rainure (WT2) de chacune des portions étroites (46) n'est pas supérieur à 3,0.

4. Pneumatique pour service intensif (2) selon l'une quelconque des revendications 1 à 3, dans lequel un rapport (DT/DA) d'une profondeur (DT) de la portion effilée (40) sur une profondeur de rainure (DA) de la rainure étroite circonférentielle (36) n'est pas inférieur à 0,05 et n'est pas supérieur à 0,30.

5. Pneumatique pour service intensif (2) selon l'une quelconque des revendications 1 à 4, dans lequel
la portion formant corps (42) a une portion à largeur élargie (48) sur le côté du fond de rainure (34), et
la portion formant corps (42) a une largeur maximum au niveau de la portion à largeur élargie (48).

6. Pneumatique pour service intensif (2) selon la revendication 5, dans lequel le côté de la portion effilée (40) de la portion à largeur élargie (48) est incurvé de manière à être évidé vers l'intérieur depuis un extérieur de la portion à largeur élargie (48) ou incurvé de manière à être bombé vers l'extérieur depuis un intérieur de la portion à largeur élargie (48).

7. Pneumatique pour service intensif (2) selon la revendication 6, dans lequel le côté de la portion effilée (40) de la portion à largeur élargie (48) est incurvé de manière à être évidé vers l'intérieur depuis l'extérieur de la portion à largeur élargie (48).
